Europäisches Patentamt

(19) **European Patent Office**

Office européen des brevets

(11) Publication number: **0 076 794**
**B1**

(12) **EUROPEAN PATENT SPECIFICATION**

(45) Date of publication of patent specification: **04.06.86**

(51) Int. Cl.⁴: **F 02 K 3/02**

(21) Application number: **81901630.4**

(22) Date of filing: **22.04.81**

(86) International application number:
PCT/US81/00528

(87) International publication number:
**WO 82/03659 28.10.82 Gazette 82/26**

(54) SUPERSONIC JET ENGINE AND METHOD OF OPERATING.

(43) Date of publication of application:
**20.04.83 Bulletin 83/16**

(45) Publication of the grant of the patent:
**04.06.86 Bulletin 86/23**

(84) Designated Contracting States:
**DE FR GB NL SE**

(56) References cited:
DE-C- 892 837
FR-A-1 291 561
GB-A- 701 324
US-A-2 947 139
US-A-3 344 606
US-A-3 514 952
US-A-4 043 121
US-A-4 072 008
US-A-4 080 785
US-A-4 287 715
US-A-4 294 068

(73) Proprietor: **THE BOEING COMPANY**
**P.O. Box 3707 Mail Stop 7E-25**
**Seattle, WA 98124 (US)**

(72) Inventor: **KLEES, Garry William**
**9130 Southeast 72nd Place**
**Mercer Island, WA 98040 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a turbo jet engine as described in the preamble of claim 1.

Such an engine is known from US—A—3 514 952. The compressor of this known engine comprises a first compressor and a second compressor downstream thereof. A portion of the first compressor discharge air is normally delivered into the bypass means. This discharge air flowing through the bypass duct is delivered to an after burner section from which it is discharged to the outer variable area discharge. The second compressor takes up that portion of the compressor discharge air from the first compressor which is not bypassed into the bypass ducts. When the bypass valve means are in the open position, the engine operates as a conventional turbofan engine. In this condition an optimum efficiency can be obtained for subsonic speeds. With increasing speeds the valve means are progressively closed, so that ultimately the engine operates as a pure turbo jet, giving an improved efficiency in supersonic flight speeds.

The invention has for its object to provide a jet engine of the kind set forth above, capable of operating as a turbo jet engine effectively at both supersonic and subsonic velocities.

According to the invention this is achieved with the measures cited in the characterizing part of claim 1.

The engine is substantially designed for operation as a pure turbo jet at subsonic cruise velocity. In this condition substantially all air passed through the compressor is thus directed through the combustion chamber and the turbine. The engine control means maintain the corrected gaseous flow into the turbine substantially constant, so that the turbine operates in different conditions at optimum efficiency. Therefore, the engine can be of a simple design with fixed stator blades.

With higher thrust settings the bypass valve means are set in a more open position as in the combustion chamber higher temperatures are created and, therefore, the corrected gaseous flow would increase with further unchanged parameters.

From US—A—3 344 606 a turbo jet engine is known, which is provided with a bypass duct capable of receiving air flow from an intermediate position in the compressor. The bypass can be opened or closed by means of a valve. With maximum supersonic flight speeds at maximum power the corrected airflow in the front stages of the compressor is low. Therefore, stall occurs. The work done per stage is therefore too small so that the density of the air delivered to the rear stages is low. This gives a high corrected airflow in the rear stages so that in these stages choking of the airflow occurs. The bypass duct in this engine is provided to overcome this problem. In the condition described the bypass ducts are opened by the valve means, so that the corrected airflow in the front stages can increase and, therefore the rear stages of the compressor can also work more efficiently. The valve means are open/shut valve means and are not controlled in a manner to a certain desired flow into the turbine.

The effect of this is that during subsonic cruise the engine can operate at a relatively low specific fuel consumption with high compression ratio and lower combustion exit temperature, in a condition with the valve bypass means at a substantially closed position. During the high power acceleration mode, the engine can operate at higher combustion exit temperatures in a condition with the valve bypass means in a more open position to maintain constant corrected flow through the turbine to satisfy the turbine requirements. A conventional turbojet without the bypass means could not accept the increased corrected flow and would therefore be limited in temperature and thrust substantially equal to the cruise temperature and thrust.

According to the principles of gas-dynamics, the nozzle area of the turbine should be sized to satisfy the following formula, under conditions of subsonic cruise, where the compressor is operating at maximum or near maximum compression ratio and the bypass valve means is substantially closed:

$$\frac{KW\sqrt{T_t}}{P_t} = \text{nozzle area}$$

where:
$K$ = A constant
$W$ = Total mass flow rate through the turbine
$P_t$ = Total pressure at the inlet face of the turbine
$T_t$ = Total temperature at the inlet face of the turbine

In a first embodiment of the present invention, a flow splitter is positioned forward of the fuel injection and ignition means, to direct bypass air from the discharge end of the compressor into a bypass passageway located radially outwardly of the combustion chamber. At the left end of the bypass passageway, there is provided a variable area turbine bypass nozzle which functions as the valve means to control flow through the bypass passageway. Thus, the bypass air is directed rearwardly in a pattern which is generally co-annular and radially outward from the main gaseous discharge through the primary exhaust nozzle.

There is a second embodiment similar to the first embodiment, except that an afterburner is placed at a location downstream of the turbine. A cooling liner surrounds the area downstream of the afterburner, and a portion of the bypass air may pass through this cooling liner to provide adequate cooling around the area of the afterburner.

In a third embodiment, the entrance to the bypass passageway is located downstream of the combustion chamber so that the bypass flow is the gaseous flow from the combustion chamber. A control valve is located at the entrance of the bypass passageway to control flow therethrough.

In a fourth embodiment, the bypass passageway is provided as a plurality of longitudinally extending tubes, positioned in a circumferential pattern around the combustion chamber and the turbine. The forward inlet ends of the tubes communicate with the airstream immediately downstream of the compressor, and the outlet ends of the tube lead into the main exhaust passageway just downstream of the turbine. Valve means are provided at the exit ends of the tubes to control bypass flow therethrough.

In the method of the present invention, there is first provided an engine having the same arrangement of engine components as that described above. This engine is operated in a manner that the bypass valve means is selectively moved between its open and closed positions as a function of burner temperature to control flow through the turbine to maintain a substantially constant flow to the turbine, which flow is calculated according to the formula given earlier herein. More specifically, when the engine is being operated at higher power settings where there are higher combustion exit temperatures, the bypass valve means is open to a greater extent to provide a smaller mass flow, yet constant corrected flow to the turbine. At lower power settings where there is lower burner temperature, as for subsonic cruise, the valve bypass means is moved to a substantially closed position, so that substantially the entire air flow passing through the compressor is directed through the turbine to provide a larger mass flow, and get constant corrected flow to the turbine.

Other features of the present invention will become apparent from the following detailed description.

Brief description of the drawings

Fig. 1 is a longitudinal semi-schematic view of a first embodiment of a jet turbine engine of the present invention;

Fig. 2 is a view similar to Fig. 1 showing a second embodiment thereof;

Fig. 3 is a semi-schematic view similar to Figs. 1 and 2 showing yet a third embodiment;

Fig. 4 is a semi-schematic view similar to Figs. 1 through 3 showing yet a fourth embodiment;

Fig. 5 is a schematic illustration of the control means for the present invention;

Fig. 6 is a graph where engine bypass ratio is plotted against Mach number to illustrate the operating characteristics of the present invention;

Figs. 7A and 7B are enthalpy-entropy diagrams illustrating operating characteristics of the present invention at low power and high power settings;

Figs. 8A and 8B are graphic illustrations of, respectively, operating characteristics of the present invention and of a variable area turbine engine; and

Fig. 9 illustrates one of the by-pass valves employed in the fourth embodiment.

Description of the preferred embodiments

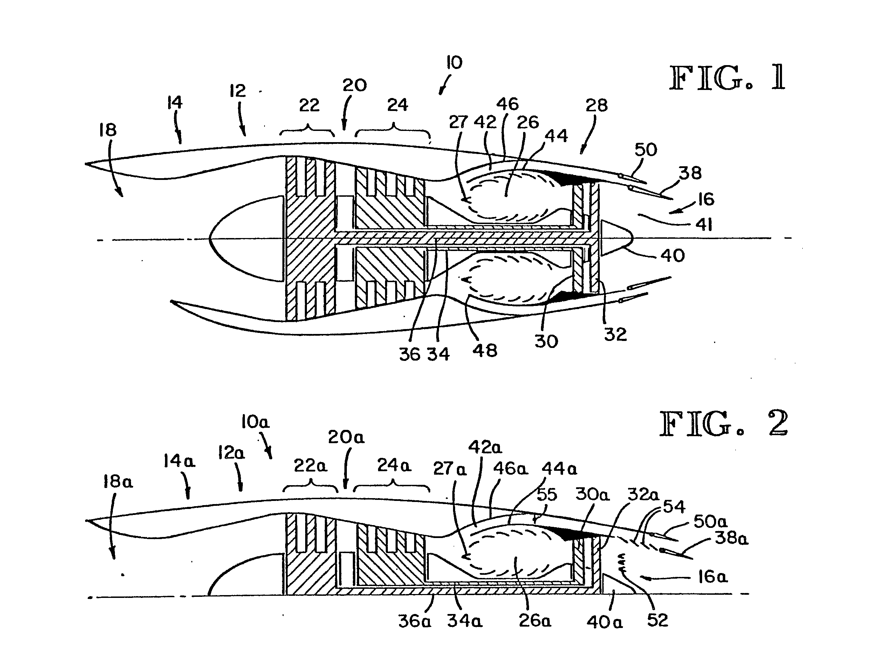

In Fig. 1 there is a schematic showing of a first embodiment of the present invention. The engine 10 comprises a housing 12 having a forward inlet end 14 and an aft exhaust end 16. At the inlet end 14 there is a supersonic inlet 18 which is or may be of conventional design, such as a variable geometry inlet. At supersonic speeds, this inlet functions to receive air at supersonic velocity, and reduce the velocity of air in the inlet to subsonic velocity.

Immediately aft of the inlet is a compressor 20. In this particular embodiment, this is a two-spool compressor, made up of a forward low pressure compressor section 22 and a rear high pressure compressor section 24. Immediately downstream of the compressor 20 the housing 12 defines a combustion chamber 26 in which is mounted a fuel injection and igniting device, indicated schematically at 27. Downstream of the fuel injection and igniting device 27 is a turbine 28, made up of a first high pressure stage 30 and a second low pressure stage 32. The high pressure stage 30 is operatively connected to the high pressure compressor section 24 through an outer shaft indicated at 34, and the low pressure stage 32 is operatively connected through an inner shaft, indicated at 36, to the low pressure compressor section 22. Downstream of the turbine 28 is a primary variable area exhaust nozzle 38, defining with a tail cone 40 a primary exhaust passageway 41 through which the primary exhaust is discharged.

At a location surrounding the combustion chamber 26 and immediately downstream of the compressor section 20, there is a turbine bypass passageway 42. In the schematic illustration of Fig. 1, this passageway 42 is shown as an annular passageway defined by inner and outer concentric walls 44 and 46, respectively. However, it is to be understood that this passageway could be formed in some other way, such as a plurality of passageways defined by individual tubes, as shown in the fourth embodiment herein. The forward end 48 of the inner wall 44 functions as a splitter to divide the air flow from the second compressor stage 24 into a main flow path which goes into the combustion chamber 26, and a bypass flow path which is through the bypass passageway 42. Flow through the bypass passageway 42 is controlled by a variable area bypass nozzle member 50 at the discharge end of the passageway 42. This nozzle member 50 can be closed down to completely shut off flow through the bypass passageway 42, or it can be moved to a full open position to permit maximum design flow through the bypass passageway 42.

Of particular significance in the present invention is the matching of the main components of the present invention, and in particular the matching of the compressor 20 with the turbine 28. Let it be assumed that the engine 10 is mounted to an aircraft which is operating at subsonic cruise (i.e., traveling at a Mach number between 0.8 and 0.95). In this subsonic cruise mode, the compressor 20 is designed to operate at maximum design compression ratio and the engine 10 is developing adequate thrust to match total drag on the aircraft (or in the case where there are multiple engines 10, to develop its proportionate share of thrust so that the several engines 10 develop sufficient thrust to overcome total subsonic drag).

In this condition, the bypass nozzle member 50 is moved to its full closed condition so that the entire flow of air from the turbine 20 is directed through the combustion chamber 26 to the turbine 28. Also, the amount of fuel that is delivered to the fuel injection and ignition device 27 is just sufficient so that the desired thrust for subsonic cruise is developed. Under these operating conditions, it is expected that the combustion exit temperature of the gases leaving the combustion chamber 26 are between approximately 815°C to 925°C (1500°F to 1700°F). Under these operating conditions, the turbine 28 is designed to have a nozzle area of a size that the gaseous flow through the first stage of the turbine is at the speed of sound.

To appreciate the significance of this matching of the compressor 20 and the turbine 28 for subsonic cruise, it should be indicated that as a general proposition, when the compressor is operating at a maximum compression ratio and maximum mass flow rate, a jet engine is able to produce the same thrust for a lower fuel consumption. Thus, with the compressor 20 and the turbine 28 being matched so that the compressor 20 is operating at maximum compression ratio and mass flow at subsonic cruise, and with all of the flow from the compressor being directed through the turbine 28, the engine 10 is able to operate at a relatively low specific fuel consumption at subsonic cruise.

Let us now consider the operating condition of the engine 10 of Fig. 1 operating at subsonic speeds and developing thrust greater than total drag so that the aircraft to which the engine 10 is mounted is in an accelerating mode of operation.

It is to be understood that since the angles of the blades in the turbine 28 are fixed, for the turbine 28 to function properly, the corrected flow through the turbine should be substantially constant. Corrected flow through the turbine is calculated according to the following formula:

$$\text{corrected flow} = \frac{W\sqrt{T}}{P}$$

where:

W=Total mass flow rate through the turbine

T=Absolute temperature at the inlet face of the turbine

P=Absolute pressure at the inlet face of the turbine

With the aircraft to which the engine 10 is mounted in an accelerating mode in the subsonic velocity range, fuel is fed to the engine 10 at its maximum rate to obtain maximum thrust, and this in turn results in higher temperatures being developed in the combustion chamber 26. As indicated above, in the formula for corrected flow, for the same amount of mass flow at the same pressure, the corrected flow increases at a rate proportional to the square root of the temperature. Thus the corrected flow from the combustion chamber 26 would be expected to increase with an increase in combustion exit temperature. To maintain corrected flow through the turbine 28 constant, the turbine bypass nozzle 50 is moved toward an open position so that a portion of the airflow from the compressor 20 flows through the turbine bypass passageway 42 and out the nozzle 50.

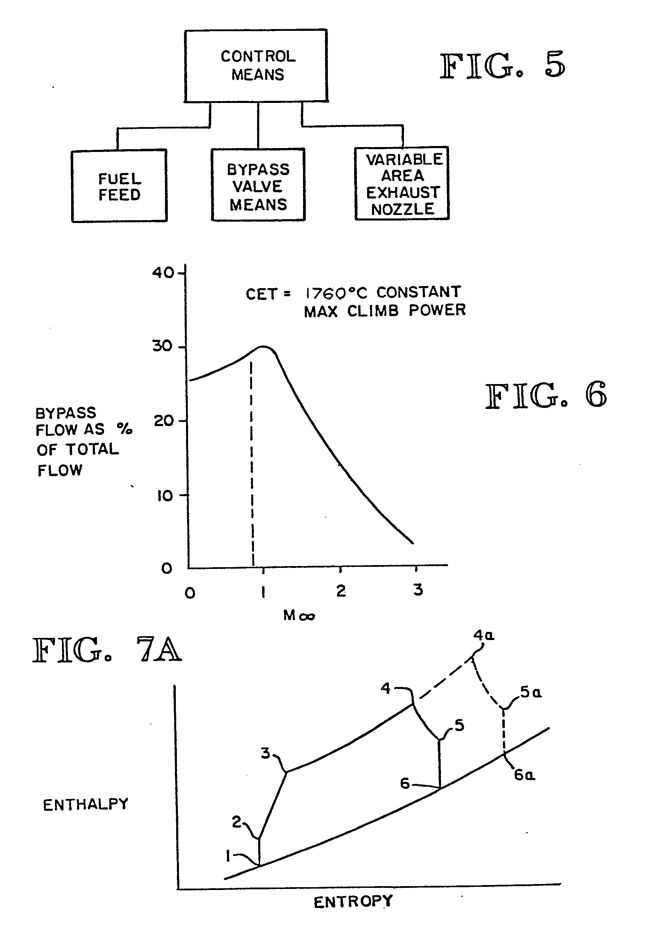

With the foregoing in mind, let us now analyze the operating characteristics of the engine 10 and the aircraft to which it is mounted when taking off from the ground, accelerating upwardly through both the subsonic and supersonic range, and finally arriving at supersonic cruise velocity. Reference is made to Fig. 6, which is a graph plotting the percentage of air which flows through the bypass passageway 42 against the Mach number at which the aircraft to which the engine 10 is mounted is cruising. In plotting this graph, the following assumptions are made.

(1) Maximum temperature is used throughout climb.

(2) The turbine area is selected and optimized to give:

a) good subsonic specific fuel consumption,

b) little or no bypass at supersonic cruise.

(3) The airplane is designed for Mach 3 cruise.

(4) The overall pressure ratio is selected to give adequately low compressor exit temperature for turbine and disc cooling at Mach 3.

It can be seen that at take-off, considerable thrust is needed, so the engine 10 is set at a moderately high power setting. As the aircraft is accelerating through the subsonic velocity range, the percentage of bypass flow increases to a maximum at or about the Mach 1 level, where near maximum power is needed to move the aircraft through the transonic range.

As the aircraft continues accelerating through the supersonic range, the engine 10 is still at a relatively high power setting and developing a relatively high amount of thrust. However, as the aircraft velocity increases the ram pressure of the air moving into the engine inlet 18 increases at a relatively high rate. Since the corrected airflow to the turbine 28 decreases in proportion to the increase in pressure, the net effect is that to maintain corrected flow through the turbine 28 constant, the percentage of bypass flow is decreased as the aircraft accelerates from Mach 1 to Mach 3. When the aircraft reaches Mach 3, it is operating at supersonic cruise velocity, and the bypass air has been substantially closed down to a rate of about 5% or possibly down to zero. This bypass air can be directed through the aft section of the engine to provide cooling around the exhaust passageway 41.

Let it now be assumed that it is no longer desired to operate the aircraft at supersonic cruise and it is desired to return to subsonic cruise. In a military aircraft, this would occur when the mission has been completed and the aircraft must travel a relatively long distance back to its base. In a commercial aircraft, this situation would occur, for example, when the aircraft is beginning its course of travel over a populated land mass where supersonic cruise is unacceptable.

In this situation, less fuel is delivered to the engine 10 so that the combustion exit temperatures decrease, and the corrected flow to the turbine 28 would likewise decrease. Therefore, to maintain the corrected flow to the turbine substantially constant, the bypass nozzle member 50 is moved further toward its closed condition to direct a greater percentage of the total flow through the turbine. When the aircraft is operating at subsonic cruise, the percentage of bypass flow has decreased to zero. At this point, the engine 10 is operating in the condition first described above, where the compressor 20 is operating at maximum compression ratio and mass flow, and the turbine 28 is sized to accept all this flow to satisfy the turbine requirements.

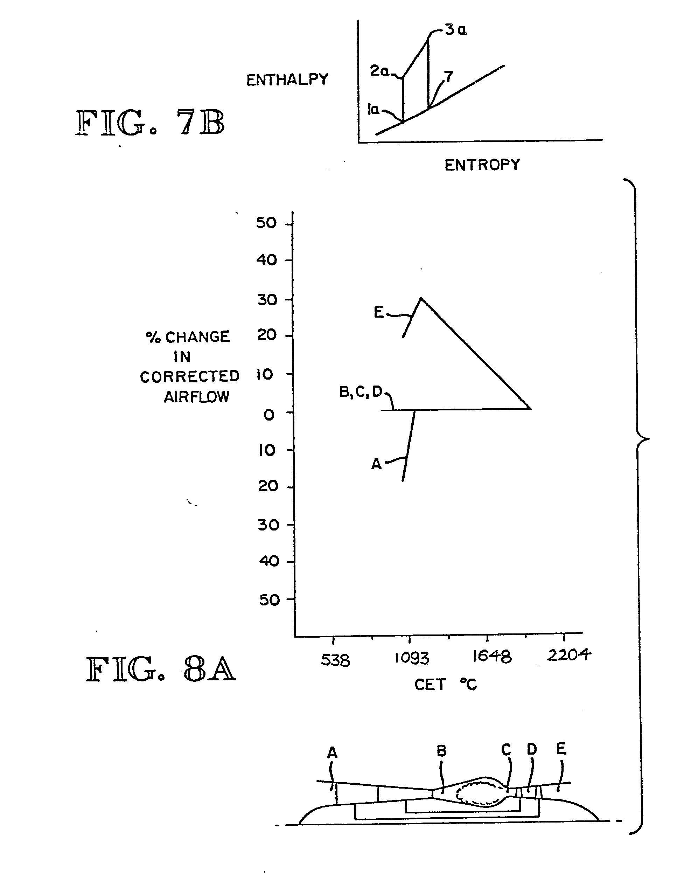

Reference is made now to Figs. 7A and 7B, in which the operating characteristics of the engine of the present invention are disclosed when enthalpy is plotted against entropy. Fig. 7A represents the condition where there is no engine bypass flow and maximum bypass flow, and Fig. 7B discloses the effect of the bypass air during high power operation where air is being bypassed during subsonic acceleration.

The solid lines in Fig. 7A represent operating characteristics at subsonic cruise, and the dotted lines indicate the operating characteristics at higher power settings during subsonic acceleration. With reference to Fig. 7A, the line segment from point 1 to point 2 indicates the rise in both pressure and temperature of the air passing into the inlet. The line segment from point 2 to point 3 represents the temperature and pressure rise of the air flowing through the compressor. The line segment from point 3 to point 4 represents the increase in temperature of the air flowing through the combustion chamber, with point 4 representing the pressure and temperature at the face of the turbine at subsonic cruise. At subsonic cruise, the temperature is assumed to be at about 925°C (1700°F.), the bypass valve means is closed, and the total gaseous flow is directed through the turbine. The line segment from point 4 to point 5 represents the temperature and pressure drop of the gaseous flow through the turbine, and the line segment from point 5 to point 6 represents the thrust developed by the gaseous flow out the exhaust nozzle.

With further reference to Fig. 7A, let it be assumed that the engine is now operated at a higher power setting, as during subsonic acceleration. The line segments from points 1 and 2 and from points 2 to 3 would be nearly the same as for subsonic cruise, since flow through the compressor is substantially the same. However, since a greater amount of fuel is being directed into the combustion chamber, combustion exit temperatures are higher, and the line segment from point 3 to point 4a indicates the rise in temperature taking place in the combustion chamber. The line segment from point 4a to point 5a represents the gaseous flow through the turbine, and the line segment from point 5a to point 6a represents the thrust developed by the gaseous flow from the turbine.

It should be indicated that in this operating condition since only a portion of the total gaseous flow is directed through the turbine, there is a greater pressure and temperature drop (from point 4a to point 5a) than there would be if it were possible to direct all of the gaseous flow through the turbine. However, the air which is bypassed around the turbine is also used to produce a thrust, and this is represented in Fig. 7B. The line segment from point 1a to point 2a represents the flow of air through the inlet, and the line segment from point 2a to point 3a represents the flow of air through the compressor. The line segment from point 3a to point 7 represents the flow of bypass air as it is being exhausted to create additional thrust. Thus, it can be recognized that during the high power setting of the engine where a certain portion of the flow is bypass flow, the thrust developed by the gaseous flow exiting from the turbine is decreased from what such thrust would be if it were possible to direct the total flow through the turbine. This is offset to some degree by the additional thrust developed by exhausting the bypass air in a manner to create thrust. However, it should also be recognized (as illustrated in the full line showing of Fig. 7A where the conditions during subsonic cruise are illustrated) that the engine is capable of functioning very effectively at subsonic cruise with a relatively low specific fuel consumption, while still having the capability (as illustrated in the dotted lines of Fig. 7A) of developing adequate thrust at higher combustion temperatures for acceleration through subsonic and supersonic range up to supersonic cruise.

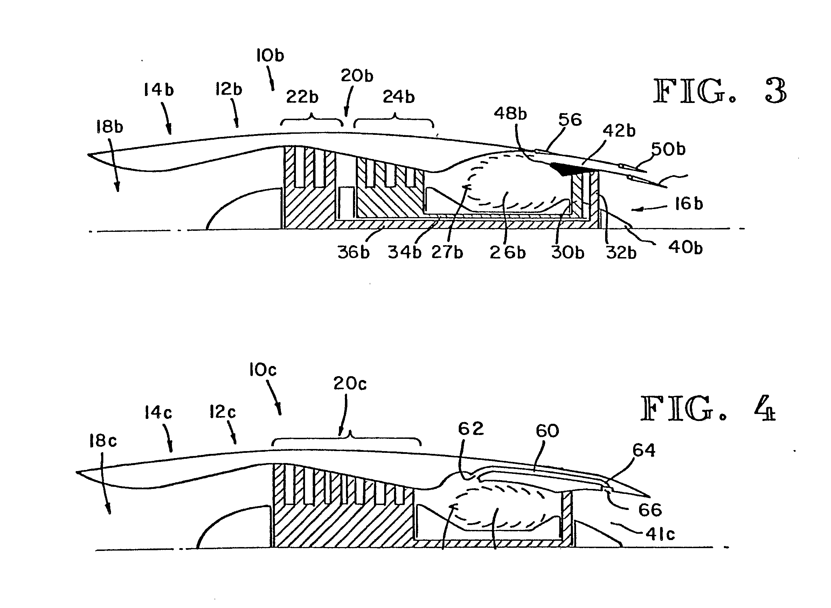

A second embodiment of the present invention is shown in Fig. 2. Components of the second embodiments which are similar to the first embodiment will be given like numerical designations, with an "a" suffix distinguishing those of the second embodiment. It can be seen that the engine 10a of Fig. 2 comprises a forward compressor 20a comprising first and second compressor sections 22a and 24a, and a two stage turbine comprising high pressure and lower pressure turbine stages 30a and 32a. There is a combustion chamber 26a and a fuel injecting and igniting device 27a positioned rearwardly of the first and second compressor sections 22a and 24a.

This second embodiment differs from the first embodiment in that an afterburner 52 is positioned downstream of the turbine 28a, and this afterburner 52 injects fuel into the gaseous flow emitted from the turbine 28a to combust with the excess air in the gaseous flow. The aft portion of the housing wall 44a is provided with a plurality of slot-like openings 54 through which a portion of the bypass air can flow to provide cooling for the wall 44a, and a valve, indicated schematically at 55, is provided in the passageway 42a to control by-pass flow.

The operation of the jet engine 10a of the second embodiment is substantially the same as that of the engine 10 of the first embodiment in that during subsonic cruise the bypass control nozzle 50a is closed, and the slotted openings 54 are also closed to shut off flow through the bypass passageway 42a. When the engine 10a is developing higher thrust, the turbine bypass nozzle member 50a is opened, in the manner described with respect to the first embodiment to maintain corrected gaseous flow through the turbine 28a constant. If yet additional thrust is required, the afterburner 52 is actuated to inject fuel into the gaseous flow from the turbine 28a, and the openings 54 in the rear section of the housing wall 44 are opened to provide cooling air flow around the gaseous flow from the afterburner 52.

Fig. 3 shows a third embodiment. Components of this third embodiment which are similar to components of the first two embodiments will be given like numerical designations, with a "b" suffix distinguishing those of the third embodiment.

The main components of this third embodiment are quite similar to those of the first two embodiments, and so these will not be repeated in this description of the third embodiment. The essential difference in this third embodiment is that the splitter 48b is positioned rearwardly of the combustion chamber 26b so that the turbine bypass passageway 42b receives gaseous flow which is a mixture of combustion gases and air. In addition to the bypass nozzle member 50b, there is a forward valve member 56 which is able to completely shut off the gaseous flow into the turbine bypass passageway 42b. During low power operation where bypass flow into the passageway 42b is not desired, this valve 56, in the form of a flapper door, is entirely closed to direct the entire gaseous flow from the combustion chamber 26b into the turbine. The arrangement in Fig. 3 has the benefit of increasing the thrust of the engine at its higher power settings. However, as an offsetting factor, it adds more complications to what is otherwise a relatively simple engine.

Fig. 4 shows a fourth embodiment of the present invention. This fourth embodiment is presently believed by the applicant to be the preferred embodiment of the four embodiments shown herein. Components of this fourth embodiment which are similar to components of the first three embodiments will be given like numerical designations with a "c" suffix distinguishing those of the fourth embodiment. This fourth embodiment differs from the previous three embodiments in that instead of illustrating an annular bypass passageway, the bypass passageway is provided by a plurality of tubular bypass members. Also, the bypass air from the compressor is directed into the gaseous flow from the turbine so that the total gaseous flow is through the main exhaust passageway.

Thus, it can be seen that the engine 10c comprises a forward compressor 20c and a rear turbine. In this particular embodiment, the compressor 20c is shown as a single spool compressor, and the turbine 28c is shown as a single stage turbine. However, it is to be recognized that as illustrated in the previous embodiments, the compressor 20c could also be made as a two spool compressor, and the turbine 28c could be made as a two stage turbine, with the two stages being operatively connected to related compressor spools.

As shown in Fig. 4, there are a plurality of longitudinally extending bypass tubes 60, arranged in a circumferential pattern around the fuel injection and igniting device and around the turbine 28c. In the schematic showing herein, only one tube 60 is shown, it being understood that there is a plurality of such tubes 60.

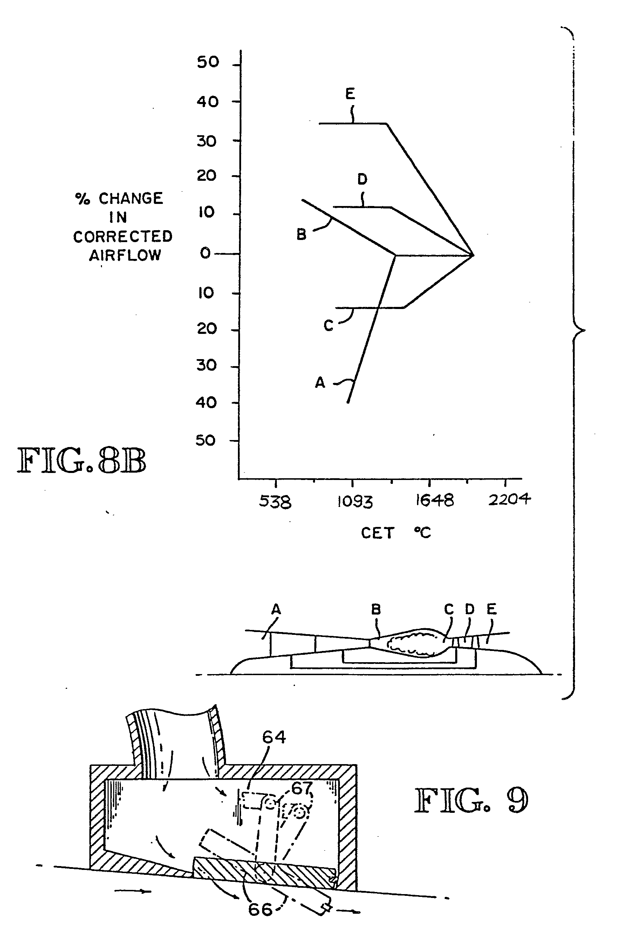

Each tube 60 has a forward entrance portion 62 located immediately downstream of the compressor 20c, and a rear exit end 64 leading into the main discharge passageway 41c downstream of the turbine 28c. To control flow through each of the bypass tubes 60, there is provided at each exit end 64 a related bypass valve 66, shown in Fig. 9. Each valve 66 is moved between its open and closed position by an associated actuating link 67. The mode of operation of the jet engine 10c can be readily understood from the afore described mode of operation of the previous three embodiments, so it will not be repeated herein.

In Fig. 5, there is a schematic illustration of the control means of the present invention. It can be seen that the control means is operatively connected to (a) the fuel feed, (b) bypass valve means, and (c) variable area exhaust nozzle, so as to control the settings of all three components. The control means is itself made responsive to the appropriate operating characteristics of the engine. Since the manner in which this is done is well known in the prior art, they will be mentioned briefly herein. Specifically, the control means could be made responsive to the revolutions per minute of the engine, the power setting of the engine, the engine pressure ratio, the exhaust gas temperature, the compressor pressure ratio, and the inlet total temperature. As indicated previously herein, the control means would respond to these various inputs to insure that the bypass valve means is at the proper setting to insure that there is constant corrected flow to the turbine.

A particularly interesting facet of the present invention is that certain advantages are achieved when it is employed with a multiple stage turbine and a multiple section compressor, as in the first embodiment.

The full explanation as to why this phenomenon occurs depends upon some rather complex analyses of engine performance, and these are well beyond the scope of this presentation of the present invention. However, as a very rough generalization, it can be said that these benefits occur in the present invention for the reason that since variations in combustion exit temperature which tend to alter corrected gas flow to the turbine are compensated for by bypassing some of the gaseous flow to the turbine, the two stages of the turbine are able to function in a relatively narrow operating range over a relatively wide range of engine power settings. Likewise, the two compressor sections are able to function in a relatively constant operating range over a wide range of engine power settings. The net effect is that it is possible to optimize engine performance within these relatively narrow ranges of operation, even though there is a wide range of power settings.

To appreciate this particular feature, let us first examine the operating characteristics of the prior art variable area turbine concept with regard to an engine having a multiple stage turbine and a two spool compressor. First, with regard to the prior art variable area turbine concept, the stator blades must be able to be rotated about their axial length from a full open position when corrected flow is greatest, and to a more closed position when corrected flow is at a minimum. To minimize operating losses at the operating extremes, the turbine is generally designed for peak operating efficiency with the blades angles at some intermediate position, with the turbine operating less efficiently at its two extreme positions.

With a two-stage variable area turbine operating at a high power setting, the blades of the first stage turbine are set at a full open position to accommodate the higher corrected flow from the combustion chamber. In this operating condition, the pressure drop and temperature drop of the gaseous flow through the turbine first stage is of a relatively smaller magnitude. Since corrected gas flow is inversely proportional to the pressure of the gas and directly proportional to the square root of the temperature, it can be seen that at this particular setting of the first stage of the turbine, the corrected flow of the gas exiting from the first stage of the turbine has not increased as greatly as it would have if the turbine first stage were operating at a setting where there was a greater pressure and temperature drop across the turbine first stage.

The effect of this is that the second turbine stage receives gaseous flow from the first turbine stage at a relatively low corrected flow. Accordingly, the blades of the second turbine stage must be moved toward a closed position to satisfy the requirements of the turbine second stage.

To examine further the operating characteristics of the prior art variable area turbine, let it be assumed that this same engine is operating at a lower power setting where corrected flow from the combustion chamber is at a lower level. In this condition, the blades of the turbine first stage are rotated to a more closed position where there is less nozzle area, and in this position there is a relatively greater drop in both pressure and temperature of the gaseous flow through the turbine first stage. Lower working temperature in the turbine reduces the work capacity of a given mass flow. Therefore a greater temperature drop and pressure drop must be taken in the turbine to accomplish the same work. This results in relatively greater corrected flow from the outlet end of the turbine first stage. To accommodate this relative increase in corrected flow, the blades of the second stage of the turbine are moved toward a more open position.

Thus to achieve a given pressure and temperature drop across the entire turbine, at the high and low power settings the two stages are in a sense operating against one another. At the high power setting the first stage moves more toward an open position to move the second stage to a more closed position. The opposite occurs at a low power setting. It is only at the intermediate power settings that both turbine stages of the variable area turbine are operating at optimum design position.

To apply a similar analysis to the present invention, where there is a two-stage turbine and two-spool compressor, maintaining corrected gas flow to the turbine first stages is accomplished by controlling the amount of turbine bypass flow. Thus, even though there are rather large changes in combustion exit temperature because of the change in the engine power setting, the turbine first stage receives substantially the same corrected gas flow and is thus operating within a relatively narrow range of operating conditions. With regard to the turbine second stage, it likewise benefits from this situation since there is relatively less variation in the corrected flow through the turbine first stage, and the turbine second stage is able to operate within a relatively narrow range of operating conditions. Since there is relatively less variation in the operation of the two turbine stages (in comparison with the variable area turbine engine), the two compressor spools, being driven by the two turbine stages, experience less variation in their operating characteristics. Thus under a wide range of power settings the two stages of the turbine and the two stages of the compressor are able to operate relatively close to their optimum design operating conditions.

It is to be recognized that the above is a vastly oversimplified explanation of rather complex analyses of engine performance. However, this explanation is presented to give at least some insight into the particular advantages of incorporating the present invention in a multiple stage engine.

A comparison of the operating characteristics of the present invention, as applied to a supersonic engine having a two spool compressor and two stage turbine, was made with respect to a comparable engine employing the variable area turbine concept also having the two spool compressor and two stage turbine. This comparison was made by analyzing the corrected flow through each engine at five different locations, indicated in the sketch accompanying Figs. 8A and 8B, these being as follows:

a. a location immediately upstream of the compressor (indicated at "A:)
b. a location immediately downstream of the compressor and upstream of the combustion chamber (indicated at "B")
c. a location at the upstream face of the turbine first stage (indicated at "C")
d. a location between the turbine first stage and turbine second stage (indicated at "D")
e. a location immediately downstream of the turbine second stage (indicated at "E").

The corrected air flow at these various locations was determined for operation at Mach 0.9, at 11000 m (36,089 feet), with combustion exit temperatures ranging from approximately 650°C (1200°F.) to approximately 925°C (1700° F.). To provide a base line for determining increase or decrease of corrected flow at varying combustion exit temperatures, the corrected air flow at approximately 1760°C (3200° F.) was determined at each location for each engine, and these values were plotted at the middle base line which is at the zero level with respect to the vertical axis of the two graphs along which percentage change in corrected air flow is plotted. Therefore any values plotted above the zero base line would indicate an increase in corrected air flow from that which occurs at combustion exit temperatures of 1760°C (3200° F.) and any values plotted below that base line would indicate a decrease in such corrected air flow. The corrected air flow for the five locations noted above in the engine of the present invention is indicated in the graph of Fig. 8A, and the corrected air flow for these five locations in the comparable variable area turbine engine is indicated in Fig. 8B.

Let us first turn our attention to the operating characteristic of the engine of the present invention, as shown in Fig. 8A. First, at very low combustion exit temperatures (e.g., below 900°C (1650°F.)) the correct air flow at the face of the compressor, indicated at "A" decreases. However, at combustion exit temperatures of 900°C (1650° F.) and higher, the corrected flow into the compressor remains substantially constant, which indicates maximum compression ratio and best overall engine performance are obtained.

Also, in the engine of the present invention, it can be seen that throughout the entire range of combustion exit temperatures, the corrected air flow remains substantially constant at a location immediately downstream of the compressor (indicated at "B"), at the face of the turbine first stage (indicated at "C"), and at the location between the two turbine stages (indicated at "D"). Thus, through a relatively wide range of power settings, both the compressor and the turbine are operating under substantially constant operating conditions with respect to corrected air flow.

To turn our attention now to the operating characteristics of the variable area turbine engine, it can be seen that at the lower combustion exit temperatures, there is substantially lower airflow at the inlet than there is with the engine of the present invention. Also, at lower combustion exit temperatures, the corrected air flow at the face of the turbine first stage (indicated at "C") is lower than at the higher combustion exit temperatures, and the corrected airflow at the face of the turbine second stage is relatively high compared with the operation at higher combustion exit temperatures. Thus, as indicated earlier herein, with the variable area turbine engine, operating at lower combustion exit temperatures the turbine first stage must be moved to a more closed position, while the turbine second stage must be moved to a more open position, and with higher combustion exit temperatures, the blades of the two turbine stages must be moved to opposite positions.

Also, it can be seen that with the variable area turbine engine, at low combustion exit temperatures, the corrected air flow immediately downstream of the compressor is somewhat higher than at higher combustion exit temperatures. This would indicate that the compression ratio of the compressor would be lower for the variable area turbine engine at low combustion exit temperatures. This, along with the fact that there is less mass flow into the compressor at low combustion exit temperatures for the variable area turbine engine, indicates that in the subsonic cruise range, where combustion exit temperatures may be as low as 900°C (1650° F.), the variable area turbine engine is not able to operate with the same cruise efficiency as the engine of the present invention. The design point efficiency of the variable area turbine is also lower, causing further reduction in cruise efficiency. Then the extreme position of the variable area turbine also causes further reduction in turbine efficiency and cruise efficiency.

**Claims**

1. A supersonic jet engine (10) adapted to cruise at supersonic speeds at a relatively high efficiency, to operate with turbine inlet temperatures of at least 2500°F (1370°C) for high power operation, and to cruise subsonically with a relatively low specific fuel consumption, said engine comprising:
    a. a housing structure (12) having an upstream inlet end (14) to receive intake air, and a downstream exhaust end (16) to discharge jet exhaust,
    b. an air inlet (18) arranged to receive intake air at subsonic velocity and also to receive intake air at supersonic velocities and reduce said air to subsonic velocity,

c. a compressor (20) mounted in said housing (12) rearwardly of said inlet (18) and arranged to compress air flowing into said inlet, said compressor (20) having an inlet end and an outlet end arranged to operate between a maximum compression ratio and a minimum compression ratio,

d. means defining a combustion chamber (26) mounted in said housing downstream of said compressor (20) to receive compressed air therefrom,

e. fuel injection and ignition means (27) in said combustion chamber arranged to burn fuel in air flow from said compressor (20) and provide a gaseous flow from said combustion chamber (26),

f. a turbine (28) mounted in said housing downstream of said combustion chamber and arranged to receive said gaseous flow from the combustion chamber at temperatures with a maximum of at least 2500°F (1370°C), said turbine (28) being operatively connected to said compressor (20) to drive said compressor, said turbine having a predetermined cross-sectional nozzle area through which said gaseous flow passes to pass outwardly through a primary exhaust passageway (41),

g. a variable area exhaust nozzle (38) to receive gaseous flow from said turbine (28) and exhaust said flow to produce a thrust,

h. turbine bypass means (42) to receive flow from a location upstream of said turbine (28) as bypass flow, and to direct said bypass flow along a path bypassing said turbine (28), and exhaust said bypass flow from said engine to produce a thrust,

i. bypass valve means (50) to control the amount of flow by-passed into said turbine bypass means (42),

j. engine control means operatively connected to said fuel injection and ignition means (27), to said bypass valve means (50) and to said exhaust nozzle (38), in a manner to control the amount of fuel directed to said fuel injection and ignition means (27), to control said bypass valve means (50) in a manner to control the amount of bypass flow through said turbine bypass means (42), and to control the discharge area through said exhaust nozzle (28), characterized in that

k. said turbine bypass means (42) are adapted to receive flow from a location downstream of said compressor (20),

l. said turbine (28) and said compressor (20) being dimensioned in a manner such that with said engine (10) operating at a subsonic cruise velocity, with said compressor (20) operating at maximum compression ratio, with said bypass valve means (50) positioned so that there is substantially no flow through said turbine bypass means (42), and with fuel flow being adequate to create thrust to match airplane drag at said subsonic cruise velocity, the turbine (28) has a flow area sized to allow gaseous flow therethrough at the speed of sound in said gaseous flow,

m. said engine control means being arranged to set said bypass valve means (50) at a more open position at higher engine thrust settings where higher temperatures are created in said combustion chamber (26), and to set said bypass valve means (50) at a more closed position at lower engine thrust settings where lower temperatures are created in said combustion chamber (26), in a manner that there is substantially constant corrected gaseous flow into said turbine (28), said corrected flow being measured according to the formula:

$$\text{corrected gaseous flow} = \frac{W\sqrt{T}}{P}$$

where:

W = Mass flow rate through the turbine

T = Absolute temperature at the inlet face of the turbine

P = Absolute pressure at the inlet face of the turbine

2. The engine according to Claim 1, characterized in that the nozzle area of the turbine (28) is sized to correspond approximately to the value derived from the following formula, where the engine is operating at subsonic cruise and said bypass valve means (50) is closed, said formula being:

$$\text{nozzle area} = \frac{KW\sqrt{T_t}}{P_t}$$

where:

K = A constant

W = Total mass flow rate through the turbine

$P_t$ = Total pressure at the inlet face of the turbine

$T_t$ = Total temperature at the inlet face of the turbine

3. The engine according to Claim 1 or 2, characterized in that said turbine bypass means comprises a plurality of generally longitudinally extending tubes (60) arranged circumferentially around said turbine, said tubes (60) having inlet means (62) located immediately downstream of said compressor (20c) so as to receive air from said compressor, and also comprising outlet means (64) leading into said primary exhaust passageway (41c) so as to direct the bypass flow in said turbine bypass means (60) into said primary exhaust passageway (41c).

4. A method of operating a jet engine according to one of the preceding Claims, characterized by controlling the amount of fuel directed to said fuel injection and ignition means (27) and controlling said bypass valve means (50) in a manner to control the amount of bypass flow through said turbine bypass means (42) so that said bypass valve means is at a more open position at higher engine thrust settings where hither temperatures are created in said combustion chamber (26), and at a more closed position at lower engine thrust settings where lower temperatures are created in said combustion chamber (26), in a manner that there is substantially constant corrected gaseous flow into said turbine (28), said corrected flow being measured according to the formula:

$$\text{corrected gaseous flow} = \frac{W\sqrt{T}}{P}$$

where:
W=Mass flow rate through the turbine
T=Absolute temperature at the inlet face of the turbine
P=Absolute pressure at the inlet face of the turbine.

## Patentansprüche

1. Überschallstrahltriebwerk (10), das dazu geeignet ist, im Reiseflug mit Überschallgeschwindigkeiten bei einer relativ hohen Leistungsfähigkeit zu fliegen, mit Turbineneinlaßtemperaturen von wenigstens 2500°F (1370°C) für Hochleistungsbetrieb zu arbeiten, und im Reiseflug mit Unterschallgeschwindigkeit bei einem relativ niedrigen spezifischen Kraftstoffverbrauch zu fliegen, wobei dieses Triebwerk folgendes umfaßt:

a. einen Gehäuseaufbau (12), der ein stromaufwärtiges Einlaßende (14) zur Aufnahme von Ansaugluft und ein stromabwärtiges Auslaßende (16) zum Ausstoßen der Düsenausströmung hat,

b. einen Lufteinlaß (18), der zur Aufnahme von Ansaugluft bei Unterschallgeschwindigkeit und außerdem zur Aufnahme von Ansaugluft bei Überschallgeschwindigkeiten und zum Herabsetzen der Luft auf Unterschallgeschwindigkeit eingerichtet ist,

c. einen Kompressor (20), der in dem Gehäuse (12) rückwärts von dem Einlaß (18) angebracht und so eingerichtet ist, daß er Luft komprimiert, die in den Einlaß strömt, wobei der Kompressor (20), der ein Einlaßende und ein Auslaßende hat, so eingerichtet ist, daß er zwischen einem maximalen Kompressionsverhältnis und einem minimalen Kompressionsverhältnis arbeitet,

d. eine Einruchtung, die eine Verbrennungskammer (26) begrenzt, welche in dem Gehäuse stromabwärts von dem Kompressor (20) zur Aufnahme von komprimierter Luft von demselben angebracht ist,

e. eine Kraftstoffeinspritz- und -zündeinrichtung (27) in der Verbrennungskammer, die zum Verbrennen von Kraftstoff in einem Luftstrom von dem Kompressor (20) und zum Liefern einer Gasströmung von der Verbrennungskammer (26) eingerichtet ist,

f. eine Turbine (28), die in dem Gehäuse stromabwärts von der Verbrennungskammer angebracht und so eingerichtet ist, daß sie die Gasströmung von der Verbrennungskammer bei Temperaturen mit einem Maximum von wenigstens 2500°F (1370°C) aufnimmt, wobei die Turbine (28) operativ mit dem Kompressor (20) zum Antrieb des Kompressor verbunden ist, und wobei die Turbine eine vorbestimmte Düsenquerschnittsfläche hat, durch welche die Gasströmung hindurchgeht, so daß sie nach auswärts durch einen primären Auslaßdurchgang (41) geht,

g. eine Auslaßdüse (38) mit variabler Fläche zur Aufnahme von Gasströmung von der Turbine (28) und zum Auslaß der Strömung zur Erzeugung eines Schubs,

h. eine Turbinennebenwegeinrichtung (42) zum Aufnehmen von Strömung von einer Stelle stromaufwärts von der Turbine (28) als Nebenwegströmung und zum Führen der Nebenwegströmung längs eines Weges, der im Nebenweg zu der Turbine (28) geht, und zum Ausstoßen der Nebenwegströmung von dem Triebwerk zur Erzeugung eines Schubs,

i. eine Nebenwegventileinrichtung (50) zum Steuern der Menge der Strömung, die im Nebenweg in die Turbinennebenwegeinrichtung (42) stömen gelassen wird,

j. eine Triebwerksteuer- bzw. -regeleinrichtung, die operativ mit der Kraftstoffeinspritz- und -zündeinrichtung (27), der Nebenwegventileinrichtung (50) und der Auslaßdüse (38) in einer Art und Weise verbunden ist, daß sie die Menge an Kraftstoff, die zu der Kraftstoffeinspritz- und -zündeinrichtung (27) geführt wird, steuert bzw. regelt, daß sie die Nebenwegventileinrichtung (50) in einer Art und Weise steuert bzw. regelt, daß die Menge an Nebenwegströmung durch die Turbinennebenwegeinrichtung (42) gesteuert bzw. geregelt wird, und daß sie die Ausstoßfläche durch die Auslaßdüse (28) steuert bzw. regelt, dadurch gekennzeichnet, daß

k. die Turbinennebenwegeinrichtung (42) so hergerichtet ist, daß sie Strömung von einer Stelle stromabwärts von dem Kompressor (20) erhält,

l. die Turbine (28) und der Kompressor (20) in einer Art und Weise derart dimensioniert sind, daß beim Betrieb des Triebwerks (10) mit Unterschallreisegeschwindigkeit, beim Betrieb des Kompressors (20) mit maximalem Kompressionsverhältnis, bei der Positionierung der Nebenwegventileinrichtung (50) so, daß im wesentlichen keine Strömung durch die Turbinennebenwegeinrichtung (42) erfolgt, und bei einem Kraftstofffluß, der zum Erzeugen von Schub adäquat ist, der dem Flugzeugwiderstand bei der Unterschallreisegeschwindigkeit entspricht, die Turbine (28) eine Strömungsfläche hat, welche so bemessen ist, daß sie eine Gasströmung durch dieselbe bei der Schallgeschwindigkeit in der Gasströmung gestattet,

m. die Triebwerksteuer- bzw. -regeleinrichtung so eingerichtet ist, daß sie die Nebenwegventileinrichtung (50) bei höheren Triebwerksschubeinstellungen, bei denen höhere Temperaturen in der Verbrennungskammer (26) erzeugt werden, in eine offenere Position einstellt, und daß sie die Nebenwegventileinrichtung, (50) bei niedrigeren Triebwerkschubeinstellungen, in denen niedrigere Temperaturen in der Verbrennungskammer (26) erzeugt werden, in einer geschlossenere Position einstellt, und zwar in einer Art und Weise, daß eine im wesentlichen konstante berichtigte Gasströmung in die Turbine (28) stattfindet, wobei diese berichtigte Strömung gemäß der Formel bemessen ist:

$$\text{berichtigte Gasströmung} = \frac{W\sqrt{T}}{P}$$

worin:
W=massenströmungsrate durch die Turbine
T=absolute Temperatur an der Einlaßfläche der Turbine
P=absoluter Druck an der Einlaßfläche der Turbine.

2. Triebwerk nach Anspruch 1 dadurch gekennzeichnet, daß die Düsenfläche der Turbine (28) so bemessen ist, daß sie ungefähr dem Wert entspricht, der aus der folgenden Formel abgeleitet ist, wenn das Triebwerk bei Unterschallreisegeschwindigkeit fliegt und die Nebenwegventileinrichtung (50) geschlossen ist, wobei die Formel wie folgt ist:

$$\text{Düsenfläche} = \frac{KW\sqrt{T_t}}{P_t}$$

worin:
K=ein Konstante
W=Gesamtmassenströmungsrate durch die Turbine
$P_t$=Gesamtdruck an der Einlaßfläche der Turbine
$T_t$=Gesamttemperatur an der Einlaßfläche der Turbine.

3. Triebwerk nach Anspruch 1 oder 2, dadurch gekennzeichnet, daß die Turbinennebenwegeinrichtung eine Mehrzahl von generell sich in Längsrichtung erstreckenden Rohren (60) umfaßt, die umfangsmäßig um die Turbine angeordnet sind, wobei die Rohre (60) eine Einlaßeinrichtung (62) haben, die sich unmittelbar stromabwärts von dem Kompressor (20c) befindet, so daß sie Luft von dem Kompressor erhält, und außerdem umfassend eine Auslaßeinrichtung (64), die in den primären Auslaßdurchgang (41c) führt, do daß sie die Nebenwegströmung in der Turbinennebenwegeinrichtung (60) in den primären Auslaßdurchgang (41c) richtet.

4. Verfahren zum Betreiben eines Strahltriebwerks gemäß einem der vorhergehenden Ansprüche, gekennzeichnet durch Steuern bzw. Regeln der Menge von Kraftstoff, die zu der Kraftstoffeinspritz- und -zündeinrichtung (27) geführt wird und Steuern bzw. Regeln der Nebenwegventileinrichtung (50) in einer Art und Weise, daß die Menge an Nebenwegströmung durch die Turbinennebenwegeinrichtung (42) so gesteuert bzw. geregelt wird, daß die Nebenwegventileinrichtung bei höheren Triebwerksschubeinstellungen, in denen höhere Temperaturen in der Verbrennungskammer (26) erzeugt werden, in einer offeneren Position ist, und bei niedrigeren Triebwerksschubeinstellungen, in denen niedrigere Temperaturen in der Verbrennungskammer (26) erzeugt werden, in einer geschlosseneren Position, und zwar in einer Art und Weise, daß im wesentlichen eine konstante bereichtigte Gasströmung in die Turbine (28) erfolgt, wobei die berichtigte Strömung gemäß der Formel bemessen wird:

$$\text{berichtigte Gasströmung} = \frac{W\sqrt{T}}{P}$$

worin:
W=Massenströmungsrate durch die Turbine
T=absolute Temperatur an der Einlaßfläche der Turbine
P=absoluter Druck an der Einlaßfläche der Turbine

**Revendications**

1. Réacteur supersonique (10) adapté à un vol de croisière à vitesse supersonique à un rendement relativement élevé, pour fonctionner à des températures d'entrée dans la turbine d'au moins 2500°F (1370°C) pour fonctionnement à puissance élevée et pour fonctionner en vol de croisière subsonique avec un consommation spécifique de carburant relativement faible, ledit moteur comportant:

a) une structure de carter (12) présentant un côté entrée en amont (14) pour recevoir l'air d'admission et un côté éjection en aval (16) pour la sortie des gaz éjectés,

b) une entrée d'air (18) disposée pour recevoir l'air d'admission à vitesse subsonique et également pour recevoir l'air d'admission à vitesse supersonique et réduire ledit air à vitesse subsonique,

c) un compresseur (20) monté dans ledit carter (12) en arrière de ladite entrée (18) et disposé pour comprimer l'air qui s'écoule dans ladite entrée, ledit compresseur (20) présentant un côté entrée et un côté sortie disposés pour fonctionner entre un rapport de compression maximal et un rapport de compression minimal,

d) des moyens définissant une chambre de combustion (26) montée dans ledit carter en aval dudit compresseur (20) pour en recevoir l'air comprimé,

e) des moyens d'injection et de combustion du carburant (27) dans ladite chambre de combustion disposés pour brûler le carburant dans le flux d'air provenant du compresseur (20) et fournir un flux gazeux sortant de ladite chambre de combustion (26),

f) une turbine (28) montée dans ledit carter en aval de ladite chambre de combustion et disposée pour recevoir ledit flux gazeux provenant de la chambre de combustion à des températures dont le maximum est d'au moins 2500°F (1370°C), ladite turbine (28) étant reliée opérationnellement audit compresseur (20) pour entrainer ledit compresseur, ladite turbine présentant une surface de tuyère de section droite prédéterminée à travers laquelle passe ledit flux gazeux pour sortir à l'extérieur à travers un passage principal d'éjection (41),

g) une tuyère d'éjection à surface variable (38) pour recevoir un flux gazeux provenant de ladite turbine (28) et éjecter ledit flux pour donner une poussée,

h) des moyens de bypass de la turbine (42) pour recevoir le flux provenant d'un emplacement situé en amont de ladite turbine (28) sous forme de flux de bypass et pour diriger ledit flux de bypass le long d'un chemin bypassant ladite turbine (28) et pour éjecter ledit flux de bypass hors dudit moteur pour produire une poussée,

i) des moyens formant clapet de bypass (50) pour commander le valeur du débit du flux bypassé dans lesdits moyens de bypass de la turbine (42),

j) des moyens de commande du moteur reliés opérationnellement audit moyen d'injection et de combustion du carburant (27), auxdits moyens formant clapet de bypass (50) et à la dite tuyère d'éjection (38), de façon à commander le débit de carburant envoyé audit moyen d'injection et de combustion du carburant (27), pour commander lesdits moyens formant clapet de bypass (50) de façon à commander la valeur du débit du flux de bypass à travers lesdits moyens formant bypass de la turbine (42) et pour commander la surface de la sortie à travers ladite tuyère d'éjection (28), caractérisé en ce que

k) lesdits moyens formant bypass de la turbine (42) sont prévus pour recevoir un flux provenant d'un emplacement situé en aval dudit compresseur (20),

l) en ce que ladite turbine (28) et ledit compresseur (20) sont dimensionnés de façon que, lorsque ledit moteur (10) fonctionne à vitesse de croisière subsonique, que ledit compresseur (20) fonctionne au rapport de compression maximal, que lesdits moyens formant clapet de bypass (50) sont placés de façon qu'il n'y ait sensiblement pas de flux à travers ledit moyens formant bypass de turbine (42) et que le débit de carburant convient pour créer une poussée qui équilibre la trainée de l'avion à ladite vitesse de croisière subsonique, la turbine (28) présente une surface de flux dimensionnée pour permettre au flux gazeux de la traverser à la vitesse du son das ledit flux gazeux,

m) lesdits moyens de commande du moteur sont disposées pour régler lesdits moyens formant clapet de bypass (50) à une position plus ouverte aux réglages plus élevés de poussée du moteur, où les températures plus élevées sont créées dans ladit chambre de combustion (26) et pour régler lesdits moyens formant clapet de bypass (50) à une position plus fermée aux réglages plus faibles de poussée du moteur où des températures plus faibles sont créées dans ladit chambre de combustion (26), de façon que l'on ait un débit gazeux corrigé sensiblement constant dans ladite turbine (28), ledit débit corrigé se mesurant selon la formule:

$$\text{débit gazeux corrigé} = \frac{W\sqrt{T}}{P}$$

avec:

W=débit massique à travers la turbine
T=température absolue à la face d'entrée de la turbine
P=température absolue à la face d'entrée de la turbine.

2. Moteur selon la revendication 1, caractérisé en ce que la surface de tuyère de la turbine (28) est dimensionnée pour correspondre approximativement à la valeur dérivée de la formule suivante, dans laquelle le moteur fonctionne en vitesse de croisière subsonique et dans laquelle lesdits moyens formant clapet de bypass (50) sont fermés, ladite formule étant:

$$\text{surface de la tuyère} = \frac{KW\sqrt{T_t}}{P_t}$$

avec:

K=une constante
W=débit massique total à travers la turbine
$P_t$=pression absolue sur la face d'entrée de la turbine
T=température absolue de la face d'entrée de la turbine.

3. Moteur selon la revendication 1 ou la revendication 2, caractérisé en ce que lesdits moyens formant bypass de la turbine comportent un certain nombre de tubes s'étendant de façon générale longitudinalement (60) disposés circçonférentiellement aurour de ladite turbine, lesdits tubes (60) présentant une entrée (62) située immédiatement en aval dudit compresseur (20c) de façon à recevoir l'air provenant dudit compresseur et comportant également une sortie (64) conduisant dans ledit passage principal d'éjection (41c) de façon à diriger dans ledit passage principal d'éjection (41c) le flux de bypass qui passe dans lesdits moyens formant bypass de la turbine (60).

4. Méthode de fonctionnement d'un réacteur conforme à l'une des revendications précédentes, caractérisé par le fait que l'on commande le débit de carburant envoyé audit moyen d'injection et de compression du carburant (27) et que l'on commande lesdits moyens formant clapet de bypass (50) de façon à commander la valeur du débit du flux de bypass passant à travers lesdits moyens formant bypass de la turbine (42) de façon que lesdits moyens formant clapet de bypass soient en une position plus ouverte aux réglages plus élevées de poussé du moteur où des températures plus élevées sont créées dans ladite de combustion (26) et à une position plus fermée aus réglages plus faibles de poussée du moteur où des températures plus faibles sont créées dans ladite chambre de combustion (26), de façon à avoir un débit gazeux corrigé sensiblement constant dans ladite turbine (28), ledit débit corrigé se mesurant selon la formule:

$$\text{débit gazeux corrigé} = \frac{W\sqrt{T}}{P}$$

avec:

W = débit massique à travers la turbine

T = température absolue à la face d'entrée de la turbine

p = pression absolue à la face d'entrée de la turbine.

FIG. 1

FIG. 2

0 076 794

FIG. 3

FIG. 4

0 076 794

FIG. 5

CONTROL MEANS

FUEL FEED

BYPASS VALVE MEANS

VARIABLE AREA EXHAUST NOZZLE

FIG. 6

CET = 1760°C CONSTANT MAX CLIMB POWER

BYPASS FLOW AS % OF TOTAL FLOW

$M\infty$

FIG. 7A

ENTHALPY

ENTROPY

3

FIG. 7B

ENTHALPY

ENTROPY

FIG. 8A

% CHANGE
IN
CORRECTED
AIRFLOW

CET °C

FIG. 8B

% CHANGE IN CORRECTED AIRFLOW

CET °C

FIG. 9

5